# EUROPÄISCHE PATENTSCHRIFT

(11) **EP 1 355 100 B1**
(45) Veröffentlichungstag und Bekanntmachung des Hinweises auf die Patenterteilung: **29.06.2005**
(21) Anmeldenummer: 03008547.6
(22) Anmeldetag: 14.04.2003
(51) Int. Cl.: F16L 37/088

(54) **Steckkupplung für fluidische Systeme**
Plug connector for fluidic systems
Raccord enfichable pour système fluidique

(30) Priorität: 15.04.2002 DE 20205833 U
(43) Veröffentlichungstag der Anmeldung: 22.10.2003
(73) Patentinhaber: Voss Automotive GmbH, 51688 Wipperfürth (DE)
(72) Erfinder: Hoffmann, Martin, 50733 Köln (DE)
(74) Vertreter: Zapf, Christoph, Dipl.-Ing.

(56) Entgegenhaltungen:
- EP-A- 0 766 033
- DE-U- 8 205 016
- US-A- 2 511 386
- US-A- 4 105 226
- US-A- 4 471 978
- US-A- 4 475 748
- US-A- 4 750 765
- US-A- 5 423 577

## Beschreibung

Die vorliegende Erfindung betrifft eine Steckkupplung für fluidische Systeme, insbesondere für CO₂- und kraftstoffführende Systeme, bestehend aus einem Gehäuse und aus einem in das Gehäuse einsteckbaren Stecker, wobei der Stecker mit einem Steckerschaft in eine Aufnahmeöffnung des Gehäuses durch mindestens eine Dichtung abgedichtet einsteckbar und darin mittels einer Verriegelungseinrichtung, bestehend aus mindestens einem auf dem Stecker angeordneten Rastelement und einer mit dem Rastelement zusammenwirkenden Rastschulter, im eingesteckten Zustand gegen Lösen arretierbar ist, und wobei das Gehäuse zweiteilig ausgeführt ist, indem es aus einem inneren Gehäuseteil und aus einem mit dem inneren Gehäuseteil lösbar verbindbaren und das innere Gehäuseteil im wesentlichen umfassenden - äußeren Gehäuseteil besteht.

Eine derartige Steckkupplung ist aus der EP 0 766 033 B1 bekannt. In diesem Dokument wird eine Steckkupplung für insbesondere pneumatische Druckmittelsysteme beschrieben, die aus zwei Kupplungsteilen besteht, und zwar aus einem Gehäuseteil und einem Steckerteil, wobei das Steckerteil mit einem Steckerschaft über mindestens eine in einer Ringnut des einen Kupplungsteils sitzende und mit einer umfänglichen Dichtfläche des anderen Kupplungsteils zusammenwirkende Umfangsdichtung abgedichtet in eine Aufnahmeöffnung des Gehäuseteils einsteckbar und mittels einer Verriegelungseinrichtung gegen Lösen arretierbar ist. Die Verriegelungseinrichtung ist dabei derart ausgebildet, daß eine teilgesteckte Vorraststellung und eine ganz gesteckte Vollraststellung gewährleistet sind, wobei in der Vorraststellung eine derart unvollständige Abdichtung vorliegt, daß im Falle einer Druckbeaufschlagung mit einem Druckmedium, insbesondere Druckluft, eine definiert begrenzte, wahmehmbare Leckage, insbesondere in Form eines akustisch wahrnehmbaren Leckgeräusches, auftritt, und wobei in der Vollraststellung über die an der Dichtfläche anliegende Umfangsdichtung eine vollständige, druckdichte Abdichtung vorliegt. Die Verriegelungseinrichtung besteht dabei aus zwei axial hintereinander auf dem Stecker angeordneten Rastelementen und einer mit dem Rastelement zusammenwirkenden Rastschulter, die sich im Kupplungsgehäuseteil im Inneren der Aufnahmeöffnung für das Steckerteil befindet.

Nachteilig an einer solchen bekannten Steckkupplung ist bei einteiliger Ausführung des Gehäuses zunächst, daß das Steckerteil, nachdem es in das Kupplungsgehäuseteil eingeführt und darin durch die Verrastung arretiert ist, nur unter Zerstörung der Steckkupplung wieder von dem Kupplungsteil getrennt werden kann. Daher ist gemäß der EP 0 766 033 B1 auch eine Ausführung vorgesehen, bei der das Gehäuseteil derart aus zwei lösbar verbundenen Teilen, einem Basisteil und einem bevorzugt als Überwurfschraube ausgebildeten Einsatzteil, besteht, daß nach Lösen des Einsatzteils vom Basisteil das Steckerteil zusammen mit einem Bestandteil der Verriegelungseinrichtung und dem Einsatzteil entnommen werden kann. Diese technische Lösung eignet sich insbesondere für Vorrichtungen, bei denen das Basisteil Bestandteil eines größeren Maschinenteiles, wie beispielsweise eines hydraulischen oder pneumatischen Anschlußblockes, ist.

Eine ähnliche, wie die vorstehend beschriebene Ausführung einer Steckkupplung beschreibt auch die US 4 105 226 A. Bei dieser bekannten Steckkupplung ist zusätzlich vorgesehen, daß die Rastschulter einendig im Eingangsbereich der Aufnahmeöffnung an dem äußeren Gehäuseteil ausgebildet ist. Dadurch wird eine zerstörungsfreie Demontage ermöglicht. Nach einem Stecken des Steckers und einem vollständigen Verrasten mit dem Gehäuse kann die Steckkupplung durch ein Lösen der Verbindung zwischen der dem äußeren und dem inneren Gehäuseteil, insbesondere durch ein Losschrauben des als Überwurfmutter ausgebildeten äußeren Gehäuseteils, gelöst werden. Dabei können das innere Gehäuseteil und der Stecker rotationsfrei bleiben, so daß der Stecker bedarfsweise z.B. ortsfest als Einschraubteil ausgeführt und das Gehäuse mit einer relativ starren Leitung, die nur geringe axiale Bewegungen zuläßt, verbunden werden kann.

Der vorliegenden Erfindung liegt die Aufgabe zugrunde, eine altemative, insbesondere für durchgehende, miteinander zu verbindende Schlauch- oder Rohrleitungen geeignete, gattungsgemäße Steckkupplung zu schaffen, die eine erhöhte Verbindungssicherheit gewährleistet.

Erfindungsgemäß wird dies durch das Vorhandensein eines ringförmigen, in der Grundgestalt im wesentlichen hohlzylindrischen, auf das Gehäuse, insbesondere auf das äußere Gehäuseteil des Gehäuses, aufschiebbaren Sicherungsteiles erreicht, das in einem Arretierzustand eine Verdrehung des in das Gehäuse einsteckbaren Stekkers gegenüber dem Gehäuse verhindert.

Diese Verbindungssicherung kann dabei vorteilhafterweise insbesondere dadurch erfolgen, daß im Arretierzustand eine formschlüssige Verbindung zwischen dem Sicherungsteil und dem Gehäuse und/oder dem Steckerteil hergestellt wird.

Mit der erfindungsgemäßen Steckkupplung kann des Weiteren vorteilhafterweise auch eine Trennung der bei der bekannten Ausführung vom inneren Gehäuseteil gleichzeitig übernommenen Funktionen "Halten des Steckers" und "Abdichten" geschehen, indem die Funktion "Halten des Steckers" auf das äußere Gehäuseteil übertragen werden kann und nur die Funktion "Abdichten" von dem inneren Gehäuseteil erfüllt wird. Dies wiederum gestattet einerseits eine hochpräzise Ausführung von Anlageflächen des inneren Gehäuseteils für die Umfangsdichtung bei gleichzeitig sehr schlanker Ausführung der gesamten erfindungsgemäßen Steckkupplung. So ist die erfindungsgemäße Steckkupplung geeignet, bei Wahl einer geeigneten Dichtung Drücken von 200 bar und höher bei Temperaturen von ca. 250 °C standzuhalten.

Weitere vorteilhafte Ausgestaltungsmerkmale der Erfindung sind in den Unteransprüchen sowie der folgenden Beschreibung enthalten.

Anhand eines bevorzugten Ausführungsbeispiels soll im folgenden die Erfindung näher erläutert werden. Dabei zeigen:
- Fig. 1: in Explosionsdarstellung ihrer Hauptbestandteile eine Ausführung einer Steckkupplung im Axialschnitt,
- Fig. 2: in Explosionsdarstellung ihrer Hauptbestandteile diese Ausführung einer Steckkupplung in perspektivischer Darstellung,
- Fig. 3: in einer Fig. 1 entsprechenden Darstellung einen ersten Montageschritt der Steckkupplung,
- Fig. 4: in einer halb über ihre axiale Länge geschnittenen Darstellung und in gegenüber den Fig. 1 bis 3 vergrößertem Maßstab, die Steckkupplung im Montage- bzw. Betriebszustand,
- Fig. 5 bis Fig. 8: wiederum in Fig. 1 entsprechender Darstellung, verschiedene aufeinanderfolgende Demontageschritte der Steckkupplung,
- Fig. 9: in Explosionsdarstellung ihrer Hauptbestandteile eine Ausführung einer erfindungsgemäßen Steckkupplung in einer halb über ihre axiale Länge geschnittenen Darstellung,
- Fig. 10: in einer Fig. 9 entsprechenden Darstellung ein äußeres Gehäuseteil und eine Demontagehülse der Ausführung einer erfindungsgemäßen Steckkupplung,
- Fig. 11: einen Querschnitt entlang der Linie XI-XI in Fig. 10,
- Fig. 12: in einer teilweise über ihre axiale Länge geschnittenen Darstellung und in gegenüber den Fig. 9 bis 11 vergrößertem Maßstab, die Ausführung einer erfindungsgemäßen Steckkupplung im Montage- bzw. Betriebszustand, mit einem inaktiven Sicherungsteil, wobei die untere Zeichnungshälfte gegenüber der oberen um 90 ° gedreht ist,
- Fig. 13: in einer teilweise über ihre axiale Länge geschnittenen Darstellung und in gegenüber den Fig. 9 bis 11 vergrößertem Maßstab, die Ausführung einer erfindungsgemäßen Steckkupplung im Montage- bzw. Betriebszustand, mit einem aktiven, in einem Arretierzustand befindlichen, Sicherungsteil, wobei die untere Zeichnungshälfte gegenüber der oberen um 90 ° gedreht ist,
- Fig. 14a, 14b und 14c: das in der Ausführung einer erfindungsgemäßen Steckkupplung vorgesehene Sicherungsteil in drei verschiedenen Ansichten.

In den verschiedenen Figuren der Zeichnung sind gleiche Teile stets mit den gleichen Bezugszeichen versehen und werden daher im folgenden in der Regel jeweils nur einmal beschrieben.

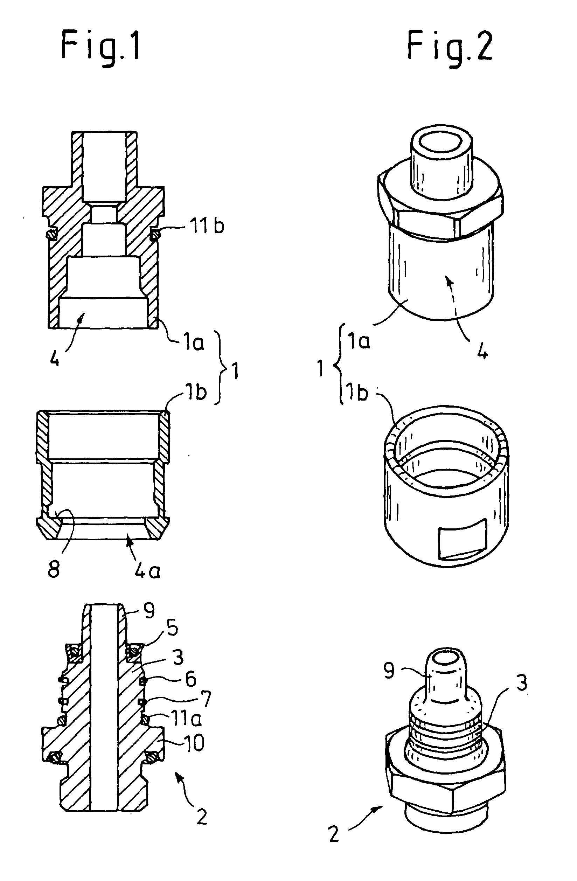

Wie sich zunächst aus Fig. 1 und 2 ergibt, besteht eine Steckkupplung für fluidische Systeme, insbesondere für CO₂- und kraftstoffführende Systeme, aus einem Gehäuse 1 und aus einem in das Gehäuse 1 einsteckbaren Stecker 2, wobei der Stecker 2 mit einem Steckerschaft 3 in eine Aufnahmeöffnung 4 des Gehäuses 1 durch mindestens eine Umfangsdichtung 5 abgedichtet einsteckbar ist. Der Stecker 2 ist in der Aufnahmeöffnung 4 mittels einer (als Ganzes nicht näher bezeichneten) Verriegelungseinrichtung im eingesteckten Zustand gegen Lösen arretierbar.

Die Verriegelungseinrichtung besteht dabei aus mindestens einem Rastelement - in der dargestellten Ausführung aus zwei axial hintereinander auf dem Stecker 2 angeordneten Rastelementen 6, 7 - und aus einer jeweils mit einem Rastelement 6, 7 zusammenwirkenden Rastschulter 8. Die Rastelemente 6, 7 sind jeweils durch einen in jeweils einer (nicht näher bezeichneten) Ringnut des Steckers 2 gehaltenen Sprengring gebildet.

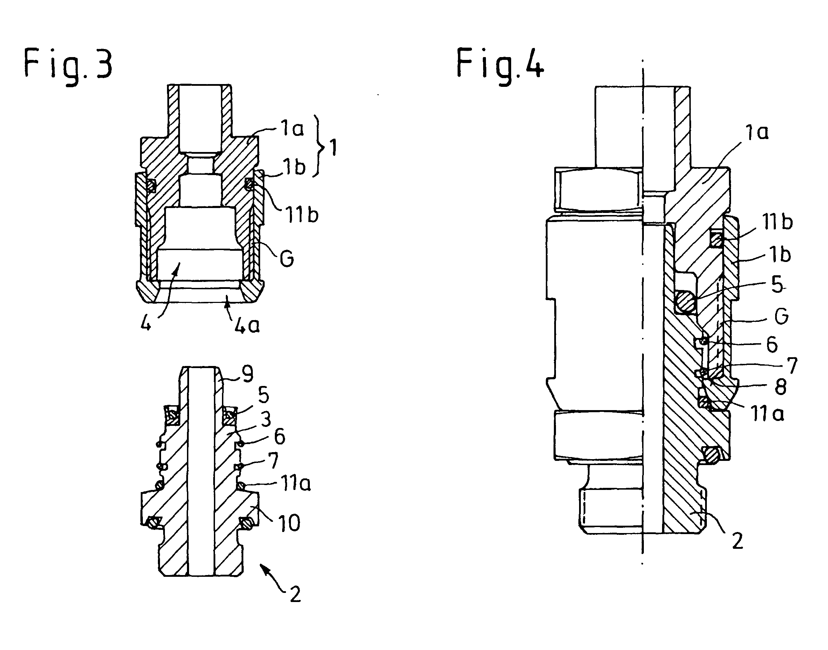

Das Gehäuse 1 ist zweiteilig ausgeführt, indem es aus einem inneren Gehäuseteil 1a, das den Hauptteil der Aufnahmeöffnung 4 bildet, und aus einem mit dem inneren Gehäuseteil 1a lösbar verbindbaren und das innere Gehäuseteil 1a im wesentlichen umfassenden äußeren Gehäuseteil 1b besteht. Die Rastschulter 8 ist einendig im Eingangsbereich 4a der Aufnahmeöffnung 4 an dem äußeren Gehäuseteil 1b ausgebildet. Wie dargestellt, kann das äußere Gehäuseteil 1b bevorzugt als mit dem inneren Gehäuseteil 1a verschraubbare Überwurfmutter ausgebildet sein. (Die entsprechenden Innen- und Außengewinde sind in der vergrößerten Darstellung von Fig. 4 dargestellt und summarisch mit dem Bezugszeichen G bezeichnet.)

Zur besseren Zentrierung - und Einführung der Fluiddichtung 5 weist der Stecker 2 stimseitig einen gegenüber dem übrigen Körper des Steckers 2 im Durchmesser reduzierten Einführungszapfen 9 mit einer konisch zulaufenden Spitze auf. Die Umfangsdichtung 5 umgreift den Einführungszapfen 9 und ist bei der ersten Ausführung der Erfindung am Fuß des Einführungszapfens 9 im Übergang zum Schaft 3 angeordnet.

Die Umfangsdichtung kann im einfachsten Fall bei geringeren Anforderungen, wie in Fig. 4 gezeigt, aus einem O-Ring gebildet sein oder, wie in den übrigen Figuren dargestellt, aus einem Dichtungssatz bestehen, der aus einem Zweilippenring und einem darin eingebetteten Federelement gebildet ist. Sie kann dabei zumindest teilweise, insbesondere der Zweilippenring, aus einer polymeren Fluor-Kohlenstoff-Verbindung, wie PTFE, bestehen (Fluor-Compound-Dichtung).

Der Stecker 2 kann bevorzugt, wie dargestellt, einen gegenüber dem übrigen Körper des Steckers 1 im Durchmesser erweiterten Bund 10 als Anschlag für das Gehäuse 1, insbesondere für dessen äußeres Gehäuseteil 1b, aufweisen, wobei auf dem Stecker 2 - axial benachbart zu dem Bund 10 liegend - eine insbesondere aus einem O-Ring gebildete Schmutzdichtung 11 a angeordnet werden kann.

Der Stecker 2 sowie sowohl das innere Gehäuseteil 1a, als auch das äußere Gehäuseteil 1b können bevorzugt aus metallischen Werkstoffen, insbesondere aus Aluminium- oder hochlegierten Edelstahllegierungen, bestehen. Ein derartiger Werkstoff ist beispielsweise AlMgSi 1.

Fig. 3 zeigt, wie bereits erwähnt, einen ersten Montageschritt der erfindungsgemäßen Steckkupplung. Dieser besteht darin, daß das äußere Gehäuseteil 1b und das innere Gehäuseteil 1 a miteinander verschraubt werden. Wie der zeichnerischen Darstellung zu entnehmen ist, übergreift dabei das äußere Gehäuseteil 1b das innere Gehäuseteil 1 a endseitig im Eingangsbereich 4a der Aufnahmeöffnung 4.

Zur Herstellung des durch Fig. 4 veranschaulichten Betriebszustandes wird der Stecker 2 in das Gehäuse 1 eingesteckt und dort verrastet. Hierzu ist zu bemerken, daß die Verrastung in an sich bekannter Weise derart geschehen kann, daß durch das erste Rastelement 6 im Zusammenwirken mit der Rastschulter 8 eine teilgesteckte Vorraststellung und durch das zweite Rastelement 7 beim weiteren Einstecken des Steckers 2 im Zusammenwirken mit der Rastschulter 8 eine ganz gesteckte Vollraststellung festgelegt sind. In der Vorraststellung liegt dabei, insbesondere bei Gasen, eine derart unvollständige Abdichtung vor, daß im Falle einer Druckbeaufschlagung des Gases, eine definiert begrenzte, wahrnehmbare Leckage, insbesondere in Form eines akustisch wahrnehmbaren Leckgeräusches, auftritt, während in der Vollraststellung über die an der Dichtfläche des inneren Gehäuseteils 1a anliegende Umfangsdichtung 5 eine vollständige, druckdichte Abdichtung vorliegt. Die Umfangsdichtung 5 liegt dann bei Erreichen des gesteckten Zustandes des Steckers 2 mit ihrem äußeren Rand an der Innenseite des inneren Gehäuseteils 1a an.

Da sich das äußere Gehäuseteil 1b im Eingangsbereich 4a der Aufnahmeöffnung 4 ausgehend von einem Innendurchmesser, der größer ist, als der Außendurchmesser der Sprengringe (Rastelemente 6, 7) im aufgeweiteten Zustand, konisch auf einen Innendurchmesser verjüngt, der etwa dem Außendurchmesser der Sprengringe im zusammengedrückten Zustand entspricht, werden die Sprengringe im Eingangsbereich 4a der Aufnahmeöffnung 4 zusammengedrückt und federn dann, nachdem sie den Eingangsbereich 4a passiert haben, jeweils wieder auf und legen sich hinter die Rastschulter, so daß der Stecker nicht mehr aus dem Gehäuse 1 herausgezogen werden kann.

Die Schmutzdichtung 11a liegt bei gestecktem Zustand des Steckers 2 mit ihrem äußeren Rand an der Innenseite des äußeren Gehäuseteils 1b im Eingangsbereich 4a der Aufnahmeöffnung 4 an. Auch am anderen Ende des äußeren Gehäuseteils 1b kann, wie in Form eines in einer äußeren Umfangsnut des inneren Gehäuseteiles liegenden O-Ringes dargestellt, eine (weitere) Schmutzdichtung 11b vorgesehen sein.

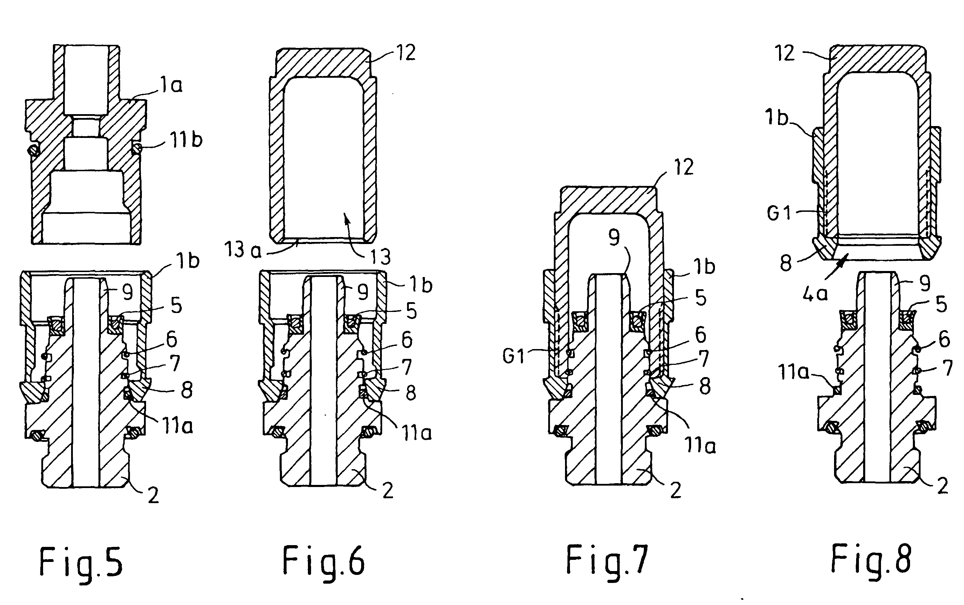

Die Demontage der Steckkupplung ist in Fig. 5 bis 8 dargestellt. Nach dem Stecken und dem vollständigen Rasten kann das System durch Losschrauben der Überwurfmutter (äußeres Gehäuseteil 1b) einfach gelöst werden, wobei vorteilhafterweise, wie bereits erwähnt, das innere Gehäuseteil 1a und das Steckerteil 2 rotationsfrei bleiben können. Beim Losschrauben der Überwurfmutter wird dann lediglich das innere Gehäuseteil 1a um den Steckweg des Steckers 2 axial zurückgeschoben (Fig. 5).

Um dann das äußere Gehäuseteil 1b von dem Steckerteil 2 zu lösen, kann anstelle des inneren Gehäuseteils 1a eine Demontagehülse 12 in das äußere Gehäuseteil 1b eingeschraubt (Fig. 6 und 7) werden. Dazu ist eine rohrförmige Demontagehülse 12 verwendbar, die sich im Eingangsbereich 13a einer axialen Öffnung 13 ausgehend von einem Innendurchmesser, der größer ist, als der Außendurchmesser der Sprengringe (Rastelemente 6, 7) im aufgeweiteten Zustand, konisch auf einen Innendurchmesser verjüngt, der etwa dem Außendurchmesser der Sprengringe im zusammengedrückten Zustand entspricht. Der Außendurchmesser der Demontagehülse 12 ist kleiner als der Innendurchmesser des äußeren Gehäuseteils 1b. Beim Einschrauben werden die Rastelemente 6, 7 entriegelt, indem sie durch die Demontagehülse 12 hinter der Rastschulter 8 weg, radial nach innen gedrückt werden, so daß das äußere Gehäuseteil 1b zusammen mit der Demontagehülse axial abgezogen werden kann (Fig. 8). Die Gewindeverbindung zwischen dem Außengewinde der Demontagehülse 12 und dem Innengewinde des äußeren Gehäuseteils 1b ist in Fig. 7 und 8 mit dem Bezugszeichen G1 bezeichnet.

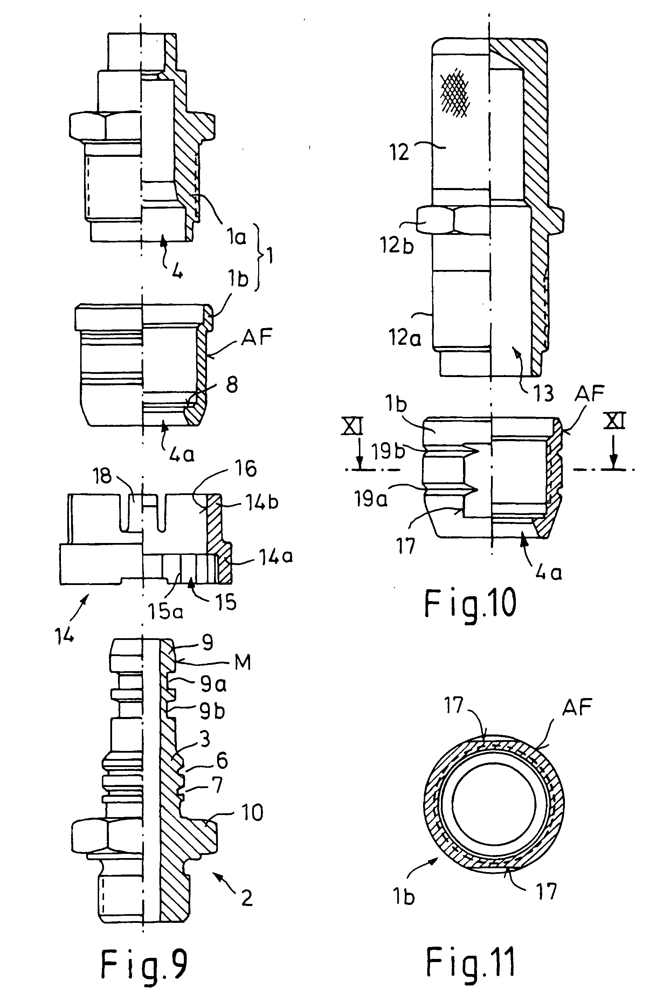

Wie bereits erwähnt, zeigen Fig. 9 bis 13, sowie 14a bis 14c eine Ausführung der Erfindung.

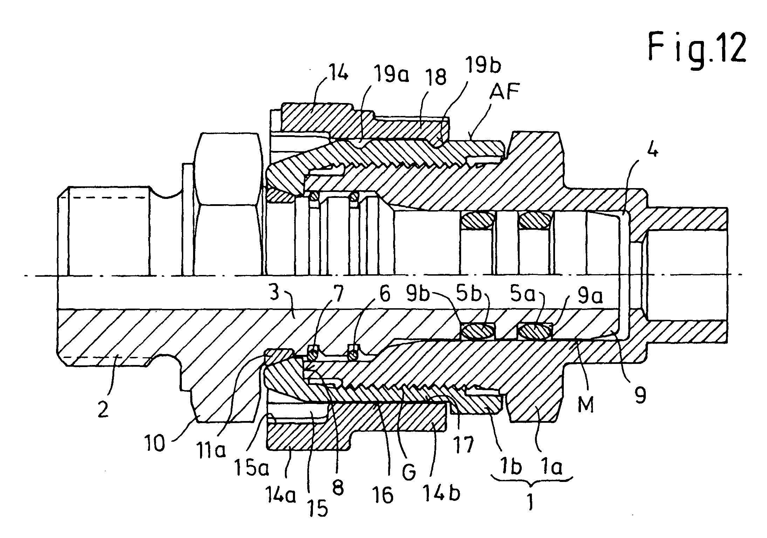

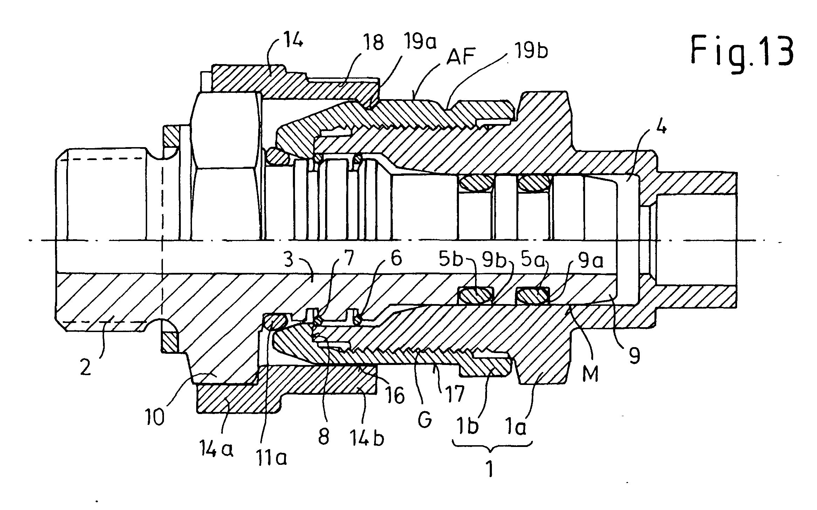

Wie insbesondere die Explosionszeichnung in Fig. 9 sowie die Darstellungen im montierten Zustand in Fig. 12 und 13 veranschaulichen, umfaßt die zweite Ausführung der Erfindung ein Gehäuse 1, das ein inneres Gehäuseteil 1a und ein äußeres Gehäuseteil 1b aufweist, wie dies bei der Ausführung gemäß Fig. 1 bis 8 der Fall ist. Der prinzipielle Aufbau ist auch im Übrigen der gleiche wie bei dieser Ausführung.

Als gegenüber der in Fig. 1 bis 8 dargestellten Ausführung zusätzliches Bauteil weist die Ausführungsform der erfindungsgemäßen Steckkupplung ein ringförmiges, in der Grundgestalt im wesentlichen hohlzylindrisches, auf das äußere Gehäuseteil 1b aufschiebbares, bevorzugt aus Kunststoff bestehendes Sicherungsteil 14 auf, das in einem Arretierzustand (Fig. 13) eine Verdrehung des Steckers 2 gegenüber dem Gehäuse 1 verhindert.

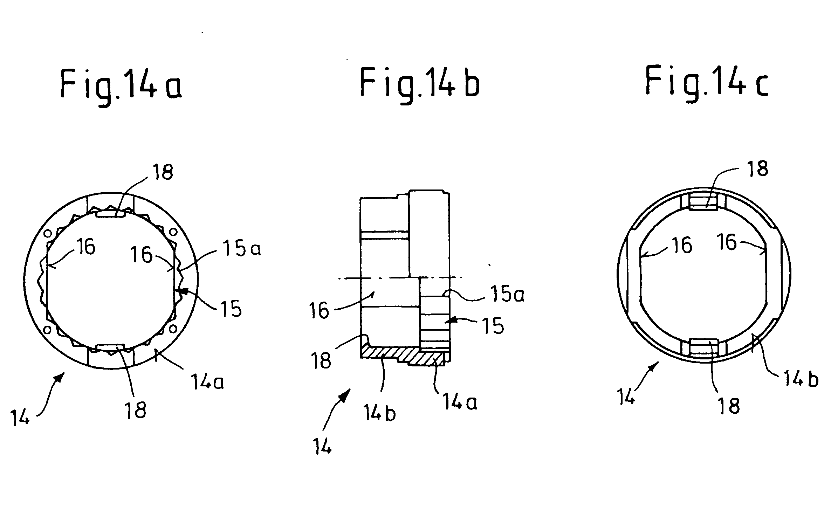

Das Sicherungsteil 14, das in Fig. 9 sowie Fig. 14a bis 14c als Einzelteil dargestellt ist, weist einen ersten Ringbereich 14a und einen zweiten Ringbereich 14b auf, wobei der erste Ringbereich 14a im Arretierzustand am Stecker 2, insbesondere an dessen Bund 10, verdrehfest festlegbar ist. Der zweite Ringbereich 14b ist an dem äußeren Gehäuseteil 1b, insbesondere an dessen Außenfläche AF, verdrehfest und außerdem in axialer Richtung verschiebungsfrei festlegbar.

Zu diesem Zweck weist das Sicherungsteil 14 in dem ersten Ringbereich 14a zur Festlegung am Stecker 2 eine Innenverzahnung 15 auf und der Bund 10 des Steckers 2 ist als Mehrkant ausgebildet. Auf diese Weise kommt im Arretierzustand eine formschlüssige Verbindung zwischen den beiden Teilen zustande. Hierbei hat es sich als günstig erwiesen, wenn die Innenverzahnung 15 12 bis 36 Zähne 15a, insbesondere 24 Zähne 15a, aufweist.

Des Weiteren veranschaulicht die Zeichnung, daß das Sicherungsteil 14 in dem zweiten Ringbereich 14b zur verdrehfesten Festlegung an dem äußeren Gehäuseteil 1b zumindest eine Schlüsselfläche 16, bevorzugt zwei Schlüsselflächen 16, aufweist, die gegenüber dem kreisförmigen Außenumfang des Teiles abgeplattet sind und im Arretierzustand (Fig. 13) des Sicherungsteils 14 zur formschlüssigen Anlage an jeweils einer korrespondierenden Schlüsselfläche 17 an der Außenfläche AF des äußeren Gehäuseteils 1b bestimmt ist. Wie diese Schlüsselflächen 17 des äußeren Gehäuseteils 1b ausgebildet sind, zeigt insbesondere die Schnittdarstellung in Fig. 11 sehr deutlich.

Das Sicherungsteil 14 weist außerdem in dem zweiten Ringbereich 14b zur in axialer Richtung verschiebungsfreien Festlegung an dem äußeren Gehäuseteil 1b zumindest eine insbesondere federnd ausgebildete Rastnase 18, bevorzugt zwei Rastnasen 18, auf, die jeweils - wie Fig. 9 verdeutlicht - durch eine Längsschlitzung des Sicherungsteiles 14 in seiner Mantelfläche hergestellt sein können. Im Arretierzustand des Sicherungsteils 14 sind diese Rastnasen 18 jeweils zur form- und kraftschlüssigen Verbindungsbildung mit jeweils einer korrespondierenden Nut 19a in der Außenfläche AF des äußeren Gehäuseteils 1b bestimmt.

Die Rastnasen 18 stehen sich - ebenso wie die Schlüsselflächen 16 - des Sicherungsteiles 14 jeweils diametral gegenüber, während die Rastnasen 19 gegenüber der Ebene der Schlüsselflächen 17 um etwa 90 ° versetzt sind. Wie in Fig. 12 dargestellt, können die Rastnasen 18, die am Sicherungsteil 14 in dem zweiten Ringbereich 14b zur in axialer Richtung verschiebungsfreien Festlegung an dem äußeren Gehäuseteil 1b vorgesehen sind, das Sicherungsteil 14 nicht nur in seinem aktiven Arretierzustand, sondern auch in einem inaktiven, nicht sichernden Zustand des Sicherungsteils 14 jeweils form- und kraftschlüssigen am äußeren Gehäuseteil 1b festlegen. Dabei kommt es zu einem Zusammenwirken mit jeweils einer korrespondierenden Nut 19b in der Außenfläche AF des äußeren Gehäuseteils 1b. Diese Nut 19b verläuft jeweils umfangsgemäß parallel zu der Nut 19a, die zur Festlegung im Arretierzustand bestimmt ist.

Die Montage- und Demontagevorgänge der erfindungsgemäßen Ausführung sind - wie der konstruktive Grundaufbau - die gleichen wie bei der ersten Ausführung der Steckkupplung, was in Fig. 10 dadurch verdeutlicht ist, daß diese wiederum eine Demontagehülse 12 für das äußere Gewindeteil 1b zeigt, welche neben ihrem Außengewinde (mit dem Bezugszeichen 12a bezeichnet) auch einen Bund 12b aufweist, der als Kraftangriff für einen Schlüssel dienen kann. Was die Montage des Sicherungsteils 14 betrifft, so kann dieses vor dem Zusammenbau des Gehäuses 1 mit dem Stecker 2 aus einer Position, wie diese in Fig. 9 dargestellt ist, auf das äußere Gehäuseteil 1b aufgeschoben und zunächst in der Art, wie dies Fig. 12 zeigt, mit dem äußeren Gehäuseteil 1b in einer inaktiven Lage rastend verbunden werden. Nachdem sich die Steckkupplung im Montage- bzw. Betriebszustand befindet (Fig. 12) kann dann der gesicherte Zustand, der Arretierzustand des Sicherungsteils 14 gemäß Fig. 13, hergestellt werden, indem die Rastverbindungen der Rastnasen 18 mit den Nuten 19b aufgehoben werden und das Sicherungsteil 14 axial verschoben wird, bis seine Zähne 15a im ersten Ringbereich 14a den Bund 10 des Steckers 2 formschlüssig umgreifen und bis die Rastnasen 18 in die dafür vorgesehenen Nuten 19a einrasten.

Bei der Ausführung der erfindungsgemäßen Steckkupplung unterscheidet sich auch die Art der Abdichtung des Steckers 2 von der der ersten, nicht erfindungsgemäßen Ausführung. So sind im Gegensatz zur ersten Ausführung am Stecker 2 zwei Umfangsdichtungen 5a, 5b vorgesehen. Diese Umfangsdichtungen 5a, 5b umgreifen den Einführungszapfen 9 und sind jeweils in einer im Mantel M des Einführungszapfens 9 befindlichen Nut 9a, 9b angeordnet. Die Nuten 9a, 9b verlaufen umfangsgemäß und parallel zueinander. Die darin befindlichen Umfangsdichtungen 5a, 5b können im Sinne einer Optimierung der Abdichtwirkung aus jeweils dem gleichen Material oder auch aus unterschiedlichen Materialien hergestellt sein.

Es ist möglich, nur ein Rastelement 7 auf dem Steckerteil 2 anzuordnen, wenn kein Bedarf für eine Vorraststellung besteht. Das beschriebene Prinzip einer Doppelrastung mit zwei Rastelementen 6, 7 besitzt auch eine eigenständige Bedeutung, das heißt, es kann beispielsweise auch unabhängig von der beschriebenen Funktion einer akustischen Leckagedetektierung realisiert werden.

Was die Ausführung der Erfindung betrifft, so sei hier festgestellt, daß das Sicherungsteil 14 auch ohne die Lokalisierung der Rastschulter 8 am äußeren Gehäuseteil 1b wirksam und von technischer Bedeutung ist. Die Nuten 19b in der Außenfläche AF des äußeren Gehäuseteils 1b, die zum Zusammenwirken mit den Rastnasen 18 im zweiten Ringbereich 14b des Sicherungsteils 14 im inaktiven, nicht sichernden Zustand des Sicherungsteils 14 bestimmt sind, weisen primär eine Haltefunktion für das Sicherungsteil 14 auf. Außerdem können sie vorteilhafterweise jedoch zusätzlich eine Signalfunktion erfüllen, indem sie, wenn sie sichtbar sind, darauf hinweisen, daß der Arretierzustand vorliegt. Um diese zweite Funktion zu unterstützen, können die Nuten 19b eine Markierung, wie eine Farbmarkierung, aufweisen.

Besonders vorteilhaft bei der dargestellten Ausführung der Erfindung ist es auch, wenn ein Lösemoment des mit dem inneren Gehäuseteil 1a verschraubten äußeren Gehäuseteiles 1b größer ist als ein Drehmoment, welches bei seiner Einwirkung auf das Sicherungsteil 14 einen Bruch des Sicherungsteils 14 herbeiführt. Diese Abstimmung kann durch eine entsprechende Wahl des Werkstoffes des Sicherungsteiles 14 erreicht werden. Durch eine solche Gestaltung führt ein unsachgemäßes Lösen der Verbindung zwischen Stecker 2 und Gehäuse 1 immer zu einer Zerstörung des Sicherungsteils 14, wobei der entstandene Schaden dann auf die Gefahr einer mögliche Leckage und auf den vorhergehenden unsachgemäßen Eingriff bzw. eine entsprechende andere zum Bruch führende schädliche Einwirkung hinweist.

### Bezugszeichen

- 1: Gehäuse
- 1a: inneres Gehäuseteil
- 1 b: äußeres Gehäuseteil
- 2: Stecker
- 3: Steckerschaft von 2
- 4: Aufnahmeöffnung von 1
- 4a: Eingangsbereich von 4
- 5, 5a, 5b: Umfangsdichtungen
- 6, 7: Rastelemente (Sprengringe)
- 8: Rastschulter von 1b
- 9: Einführungszapfen von 2
- 9a, 9b: Nuten in M
- 10: Bund von 2
- 11a, 11b: Schmutzdichtungen (O-Ringe)
- 12: Demontagehülse
- 12a: Außengewinde von 12
- 12b: Bund von 12
- 13: Öffnung in 12
- 13a: Eingangsbereich von 13
- 14: Sicherungsteil
- 14a: erster Ringbereich von 14
- 14b: zweiter Ringbereich von 14
- 15: Innenverzahnung von 14a
- 15a: Zahn von 15
- 16: Schlüsselfläche von 14
- 17: Schlüsselfläche von 1b
- 18: Rastnase von 14
- 19a, 19b: Nuten in 1b für 18
- AF: Außenfläche von 1b
- G: Gewinde
- M: Mantel von 9

## Patentansprüche

1. Steckkupplung für fluidische Systeme, insbesondere für CO₂- und kraftstoffführende Systeme, bestehend aus einem Gehäuse (1) und aus einem in das Gehäuse (1) einsteckbaren Stecker (2), wobei der Stecker (2) mit einem Steckerschaft (3) in eine Aufnahmeöffnung (4) des Gehäuses (1) durch mindestens eine Umfangsdichtung (5, 5a, 5b) abgedichtet einsteckbar und darin mittels einer Verriegelungseinrichtung, bestehend aus mindestens einem auf dem Stecker (2) angeordneten Rastelement (7) und einer mit dem Rastelement (7) zusammenwirkenden Rastschulter (8), im eingesteckten Zustand gegen Lösen arretierbar ist, und wobei das Gehäuse (1) zweiteilig ausgeführt ist, indem es aus einem inneren Gehäuseteil (1a) und aus einem mit dem inneren Gehäuseteil (1a) lösbar verbindbaren und das innere Gehäuseteil (1a) im wesentlichen umfassenden äußeren Gehäuseteil (1b) besteht,
**gekennzeichnet durch** ein ringförmiges, in der Grundgestalt im wesentlichen hohlzylindrisches, auf das Gehäuse (1), insbesondere auf das äußere Gehäuseteil (1b) des Gehäuses (1), aufschiebbares Sicherungsteil (14), das in einem Arretierzustand eine Verdrehung des in das Gehäuse (1) einsteckbaren Steckers (2) gegenüber dem Gehäuse (1) verhindert.

2. Steckkupplung nach Anspruch 1,
**dadurch gekennzeichnet, daß** das äußere Gehäuseteil (1b) als mit dem inneren Gehäuseteil (1a) verschraubbare Überwurfmutter ausgebildet ist.

3. Steckkupplung nach Anspruch 1 oder 2,
**dadurch gekennzeichnet, daß** das äußere Gehäuseteil (1b) das innere Gehäuseteil (1a) im Eingangsbereich (4a) der Aufnahmeöffnung (4) endseitig übergreift.

4. Steckkupplung nach einem der Ansprüche 1 bis 3,
**gekennzeichnet durch** mindestens zwei Umfangsdichtungen (5a, 5b).

5. Steckkupplung nach einem der Ansprüche 1 bis 4,
**dadurch gekennzeichnet, daß** der Stecker (2) stimseitig einen, insbesondere gegenüber dem übrigen Körper des Steckers (2) im Durchmesser reduzierten, Einführungszapfen (9) aufweist.

6. Steckkupplung nach Anspruch 5,
**dadurch gekennzeichnet, daß** mindestens eine Umfangsdichtung (5) den Einführungszapfen (9) umgreift und am Fuß des Einführungszapfens (9) angeordnet ist.

7. Steckkupplung nach Anspruch 5,
**dadurch gekennzeichnet, daß** mindestens eine Umfangsdichtung (5a, 5b), bevorzugt zwei Umfangsdichtungen (5a, 5b), den Einführungszapfen (9) umgreift/umgreifen und jeweils in einer im Mantel (M) des Einführungszapfens (9) befindlichen Nut (9a, 9b) angeordnet ist/sind.

8. Steckkupplung nach einem der Ansprüche 1 bis 7,
**dadurch gekennzeichnet, daß** die Umfangsdichtung (5, 5a, 5b) jeweils bei gestecktem Zustand des Steckers (2) mit ihrem äußeren Rand an der Innenseite des inneren Gehäuseteils (2a) anliegt.

9. Steckkupplung nach einem der Ansprüche 1 bis 8,
**dadurch gekennzeichnet, daß** die Umfangsdichtung (5, 5a, 5b) jeweils aus einem O-Ring gebildet ist.

10. Steckkupplung nach einem der Ansprüche 1 bis 6,
**dadurch gekennzeichnet, daß** die Umfangsdichtung (5) aus einem Dichtungssatz besteht, der aus einem Zweilippenring und einem darin eingebetteten Federelement gebildet ist.

11. Steckkupplung nach einem der Ansprüche 1 bis 10,
**dadurch gekennzeichnet, daß** die Umfangsdichtung (5, 5a, 5b) zumindest teilweise, insbesondere der Zweilippenring, aus einer polymeren Fluor-Kohlenstoff-Verbindung, wie PTFE, besteht.

12. Steckkupplung nach einem der Ansprüche 1 bis 11,
**dadurch gekennzeichnet, daß** der Stecker (2) einen gegenüber dem übrigen Körper des Steckers (2) im Durchmesser erweiterten Bund (10) als Anschlag für das Gehäuse (1), insbesondere für dessen äußeres Gehäuseteil (1b), aufweist.

13. Steckkupplung nach Anspruch 12,
**dadurch gekennzeichnet, daß** auf dem Stecker (2) - axial benachbart zu dem Bund (10) liegend - eine insbesondere aus einem O-Ring gebildete Schmutzdichtung (11a) angeordnet ist.

14. Steckkupplung nach Anspruch 13,
**dadurch gekennzeichnet, daß** die Schmutzdichtung (11a) bei gestecktem Zustand des Steckers (2) mit ihrem äußeren Rand an der Innenseite des äußeren Gehäuseteils (1b) im Eingangsbereich (4a) der Aufnahmeöffnung (1b) anliegt.

15. Steckkupplung nach einem der Ansprüche 1 bis 14,
**dadurch gekennzeichnet, daß** zwischen dem inneren Gehäuseteil (1a) und dem äußeren Gehäuseteil (1b) eine Schmutzdichtung (11b) angeordnet ist.

16. Steckkupplung nach einem der Ansprüche 1 bis 15,
**dadurch gekennzeichnet, daß** der Stecker (2) sowie das innere Gehäuseteil (1a) und das äußere Gehäuseteil (1b) aus metallischen Werkstoffen, insbesondere aus Aluminium- oder hochlegierten Edelstahllegierungen, bestehen.

17. Steckkupplung nach einem der Ansprüche 1 bis 15,
**dadurch gekennzeichnet, daß** auf dem Stecker (2) ein weiteres Rastelement (6) angeordnet ist.

18. Steckkupplung nach einem der Ansprüche 1 bis 16,
**dadurch gekennzeichnet, daß** auf dem Stecker (2) ein weiteres Rastelement (6) angeordnet ist, derart, daß durch dieses weitere Rastelement (6) im Zusammenwirken mit der Rastschulter (8) eine teilgesteckte Vorraststellung und durch das andere Rastelement (7) beim weiteren Einstecken des Steckers (2) im Zusammenwirken mit der Rastschulter (8) eine ganz gesteckte Vollraststellung festgelegt sind, wobei in der Vorraststellung eine derart unvollständige Abdichtung vorliegt, daß im Falle einer Druckbeaufschlagung des Fluids, insbesondere eines Gases, eine definiert begrenzte, wahmehmbare Leckage, insbesondere in Form eines akustisch wahmehmbaren Leckgeräusches, auftritt, und wobei in der Vollraststellung über die an der Dichtfläche anliegende Umfangsdichtung (5) eine vollständige, druckdichte Abdichtung vorliegt.

19. Steckkupplung nach einem der Ansprüche 1 bis 18,
**dadurch gekennzeichnet, daß** das Rastelement (7) oder die Rastelemente (6, 7) jeweils durch einen in jeweils einer Ringnut des Steckers (2) gehaltenen Sprengring gebildet sind.

20. Steckkupplung nach Anspruch 19,
**dadurch gekennzeichnet, daß** sich das äußere Gehäuseteil (1b) im Eingangsbereich (4a) der Aufnahmeöffnung (4) - ausgehend von einem Innendurchmesser, der größer ist, als der Außendurchmesser des Sprengrings im aufgeweiteten Zustand, konisch auf einen Innendurchmesser verjüngt, der etwa dem Außendurchmesser des Sprengrings im zusammengedrückten Zustand entspricht.

21. Steckkupplung nach Anspruch 19 oder 20,
**gekennzeichnet durch** eine anstelle des inneren Gehäuseteils (1a) in das äußere Gehäuseteil (1b) einschraubbare Demontagehülse (12), die sich insbesondere im Eingangsbereich (13a) einer axialen Öffnung (13) ausgehend von einem Innendurchmesser, der größer ist, als der Außendurchmesser des Sprengrings im aufgeweiteten Zustand, konisch auf einen Innendurchmesser verjüngt, der etwa dem Außendurchmesser des Sprengrings im zusammengedrückten Zustand entspricht.

22. Steckkupplung nach einem der Ansprüche 1 bis 21,
**dadurch gekennzeichnet, daß** die Rastschulter (8) einendig in einem Eingangsbereich (4a) der Aufnahmeöffnung (4) an dem äußeren Gehäuseteil (1b) ausgebildet ist.

23. Steckkupplung nach einem der Ansprüche 1 bis 22,
**dadurch gekennzeichnet, daß** das Sicherungsteil (14) einen ersten Ringbereich (14a) und einen zweiten Ringbereich (14b) aufweist, wobei der erste Ringbereich (14a) am Stecker (2), insbesondere an dessen Bund (10), verdrehfest festlegbar ist und wobei der zweite Ringbereich (14b) an dem äußeren Gehäuseteil (1b), insbesondere an dessen Außenfläche (AF), verdrehfest und in axialer Richtung verschiebungsfrei festlegbar ist.

24. Steckkupplung nach einem der Ansprüche 1 bis 23,
**dadurch gekennzeichnet, daß** das Sicherungsteil (14) in dem ersten Ringbereich (14a) zur Festlegung am Stecker (2) eine Innenverzahnung (15) aufweist, wobei der Bund (10) des Steckers (2) als Mehrkant ausgebildet ist.

25. Steckkupplung nach Anspruch 24,
**dadurch gekennzeichnet, daß** die Innenverzahnung (15) 12 bis 36 Zähne (15a), insbesondere 24 Zähne (15a), aufweist.

26. Steckkupplung nach Anspruch 23 bis 25,
**dadurch gekennzeichnet, daß** das Sicherungsteil (14) in dem zweiten Ringbereich (14b) zur verdrehfesten Festlegung an dem äußeren Gehäuseteil (1b) zumindest eine Schlüsselfläche (16), bevorzugt zwei Schlüsselflächen (16), aufweist, die im Arretierzustand des Sicherungsteils (14) zur formschlüssigen Anlage an jeweils einer korrespondierenden Schlüsselfläche (17) an der Außenfläche (AF) des äußeren Gehäuseteils (1b) bestimmt ist.

27. Steckkupplung nach einem der Ansprüche 23 bis 26,
**dadurch gekennzeichnet, daß** das Sicherungsteil (14) in dem zweiten Ringbereich (14b) zur in axialer Richtung verschiebungsfreien Festlegung an dem äußeren Gehäuseteil (1b) zumindest eine insbesondere federnd ausgebildete Rastnase (18), bevorzugt zwei Rastnasen (18), aufweist, die im Arretierzustand des Sicherungsteils (14) jeweils zum form- und kraftschlüssigen Zusammenwirken mit jeweils einer korrespondierenden Nut (19a) in der Außenfläche (AF) des äußeren Gehäuseteils (1b) bestimmt ist.

28. Steckkupplung nach einem der Ansprüche 23 bis 27,
**dadurch gekennzeichnet, daß** das Sicherungsteil (14) in dem zweiten Ringbereich (14b) zur in axialer Richtung verschiebungsfreien Festlegung an dem äußeren Gehäuseteil (1b) zumindest eine Rastnase (18), bevorzugt zwei Rastnasen (18), aufweist, die in einem inaktiven, nicht sichernden Zustand des Sicherungsteils (14) jeweils zum form- und kraftschlüssigen Zusammenwirken mit jeweils einer korrespondierenden Nut (19b) in der Außenfläche (AF) des äußeren Gehäuseteils (1b) bestimmt ist.

29. Steckkupplung nach Anspruch 28,
**dadurch gekennzeichnet, daß** die Nut (19b) in der Außenfläche (AF) des äußeren Gehäuseteils (1b), die zum Zusammenwirken mit der Rastnase (18) oder den Rastnasen (18) im zweiten Ringbereich (14b) des Sicherungsteils (14) im inaktiven, nicht sichernden Zustand des Sicherungsteils (14) bestimmt ist, eine Markierung, wie eine Farbmarkierung, aufweist.

30. Steckkupplung nach einem der Ansprüche 1 bis 29,
**dadurch gekennzeichnet, daß** ein Lösemoment des mit dem inneren Gehäuseteil (1a) verschraubten äußeren Gehäuseteiles (1b) größer ist als ein Drehmoment, welches bei seiner Einwirkung auf das Sicherungsteil (14) einen Bruch des Sicherungsteils (14) herbeiführt.

## Claims

1. A plug-in coupling for fluidic systems, particularly for CO₂- and fuel-conducting systems, consisting of a housing (1) and a plug (2) which may be inserted into the housing (1), wherein a plug shaft (3) of the plug (2) may be inserted into a receiving opening (4) of the housing (1) so as to be sealed by means of at least one circumferential seal (5, 5a, 5b) and is locked therein in the inserted state against release by means of a locking device consisting of at least one detent element (7) arranged on the plug (2) and a detent shoulder (8) cooperating with the detent element (7), and wherein the housing (1) is of two-part design, in that it consists of an inner housing part (1a) and an outer housing part (1b) which may be releasably connected to the inner housing part (1a) and substantially encloses the inner housing part (1a),
**characterised by** an annular securing part (14) which is substantially hollow-cylindrical in the basic shape and may be slid onto the housing (1), particularly onto the outer housing part (1b) of the housing (1), which securing part, in a locking state, prevents rotation of the plug (2) insertable into the housing (1) in relation to the housing (1).

2. A plug-in coupling according to Claim 1,
**characterised in that** the outer housing part (1b) is designed as a sleeve nut which may be screwed to the inner housing part (1a).

3. A plug-in coupling according to Claim 1 or 2,
**characterised in that** the outer housing part (1b) engages over the inner housing part (1a) at the end in the entry region (4a) of the receiving opening (4).

4. A plug-in coupling according to one of Claims 1 to 3,
**characterised by** at least two circumferential seals (5a, 5b).

5. A plug-in coupling according to one of Claims 1 to 4,
**characterised in that** the plug (2) has on its end face an insertion pin (9) which is reduced in diameter particularly in relation to the rest of the body of the plug (2).

6. A plug-in coupling according to Claim 5,
**characterised in that** at least one circumferential seal (5) engages around the insertion pin (9) and is arranged at the base of the insertion pin (9).

7. A plug-in coupling according to Claim 5,
**characterised in that** at least one circumferential seal (5a, 5b), preferably two circumferential seals (5a, 5b), engages/engage around the insertion pin (9) and is/are arranged in each case in a groove (9a, 9b) located in the cylindrical surface (M) of the insertion pin (9).

8. A plug-in coupling according to one of Claims 1 to 7,
**characterised in that**, in the inserted state of the plug (2), the circumferential seal (5, 5a, 5b) fits in each case with its outer edge against the inside of the inner housing part (2a).

9. A plug-in coupling according to one of Claims 1 to 8,
**characterised in that** the circumferential seal (5, 5a, 5b) is formed in each case from an O-ring.

10. A plug-in coupling according to one of Claims 1 to 6,
**characterised in that** the circumferential seal (5) consists of a set of seals formed from a two-lipped ring and a spring element embedded therein.

11. A plug-in coupling according to one of Claims 1 to 10,
**characterised in that** the circumferential seal (5, 5a, 5b) consists at least in part, particularly the two-lipped ring, of a polymeric fluorocarbon compound, such as PTFE.

12. A plug-in coupling according to one of Claims 1 to 11,
**characterised in that** the plug (2) has a collar (10) which is expanded in diameter in relation to the rest of the body of the plug (2) as a stop for the housing (1), particularly for the outer housing part (1b) thereof.

13. A plug-in coupling according to Claim 12,
**characterised in that** a dirt seal (11a) formed particularly from an O-ring is arranged on the plug (2) - lying axially adjacent to the collar (10).

14. A plug-in coupling according to Claim 13,
**characterised in that**, when the plug (2) is in the inserted state, the dirt seal (11a) fits with its outer edge against the inside of the outer housing part (1b) in the entry region (4a) of the receiving opening (4).

15. A plug-in coupling according to one of Claims 1 to 14,
**characterised in that** a dirt seal (11b) is arranged between the inner housing part (1a) and the outer housing part (1b).

16. A plug-in coupling according to one of Claims 1 to 15,
**characterised in that** the plug (2) and also the inner housing part (1a) and the outer housing part (1b) consist of metallic materials, particularly aluminium alloys or high-alloy special steel alloys.

17. A plug-in coupling according to one of Claims 1 to 15,
**characterised in that** a further detent element (6) is arranged on the plug (2).

18. A plug-in coupling according to one of Claims 1 to 16,
**characterised in that** a further detent element (6) is arranged on the plug (2) in such a way that, by means of this further detent element (6) in cooperation with the detent shoulder (8), a partially inserted pre-locking position is established, and by means of the other detent element (7), on further insertion of the plug (2), in cooperation with the detent shoulder (8), a completely inserted full locking position is established, wherein an incomplete seal exists in the pre-locking position such that, in the event of pressurizing of the fluid, particularly a gas, a perceptible leakage, particularly in the form of an acoustically perceptible leakage noise, which is limited in a defined manner, occurs, and wherein a complete, pressure-tight seal exists in the full locking position by way of the circumferential seal (5) fitting against the sealing surface.

19. A plug-in coupling according to one of Claims 1 to 18,
**characterised in that** the detent element (7) or the detent elements (6, 7) are formed in each case by a snap ring held in a respective annular groove of the plug (2).

20. A plug-in coupling according to Claim 19,
**characterised in that** the outer housing part (1b) tapers in the entry region (4a) of the receiving opening (4) - starting from an inside diameter which is larger than the outside diameter of the snap ring in the expanded state, conically to an inside diameter which corresponds approximately to the outside diameter of the snap ring in the compressed state.

21. A plug-in coupling according to Claim 19 or 20,
**characterised by** a removal sleeve (12) which may be screwed instead of the inner housing part (1a) into the outer housing part (1b), which tapers particularly in the entry region (13a) of an axial opening (13), starting from an inside diameter which is larger than the outside diameter of the snap ring in the expanded state, conically to an inside diameter which corresponds approximately to the outside diameter of the snap ring in the compressed state.

22. A plug-in coupling according to one of Claims 1 to 21,
**characterised in that** the detent shoulder (8) is formed at one end in an entry region (4a) of the receiving opening (4) on the outer housing part (1b).

23. A plug-in coupling according to one of Claims 1 to 22,
**characterised in that** the securing part (14) has a first annular region (14a) and a second annular region (14b), wherein the first annular region (14a) may be fixed in place, fixed rotationally, on the plug (2), particularly on the collar (10) thereof, and wherein the second annular region (14b) may be fixed in place, fixed rotationally and free from displacement in the axial direction, on the outer housing part (1b), particularly on the outer surface (AF) thereof.

24. A plug-in coupling according to one of Claims 1 to 23,
**characterised in that** the securing part (14) has an internal toothing (15) in the first annular region (14a) for fixing it in place on the plug (2), the collar (10) of the plug (2) being designed as a polygon.

25. A plug-in coupling according to Claim 24,
**characterised in that** the interior toothing (15) has 12 to 36 teeth (15a), particularly 24 teeth (15a).

26. A plug-in coupling according to Claim 23 to 25,
**characterised in that** the securing part (14) has at least one wrench surface (16), preferably two wrench surfaces (16), in the second annular region (14b) for fixing it in a rotationally fixed manner on the outer housing part (1b), which wrench surface in the locking state of the securing part (14) is intended for a positive-locking fit against a respectively corresponding wrench surface (17) on the outer surface (AF) of the outer housing part (1b).

27. A plug-in coupling according to one of Claims 23 to 26,
**characterised in that** the securing part (14) has at least one detent projection (18), preferably two detent projections (18), particularly designed so as to be resilient, in the second annular region (14b) for fixing it so as to be free from displacement in the axial direction on the outer housing part (1b), which detent projection, in the locking position of the securing part (14), is intended in each case for positive-locking and frictional cooperation with a respectively corresponding groove (19a) in the outer surface (AF) of the outer housing part (1b).

28. A plug-in coupling according to one of Claims 23 to 27,
**characterised in that** the securing part (14) has at least one detent projection (18), preferably two detent projections (18), in the second annular region (14b) for fixing it so as to be free from displacement in the axial direction on the outer housing part (1b), which detent projection, in an inactive, non-securing state of the securing part (14), is intended in each case for positive-locking and frictional cooperation with a respectively corresponding groove (19b) in the outer surface (AF) of the outer housing part (1b).

29. A plug-in coupling according to Claim 28,
**characterised in that** the groove (19b) has a marking, such as a colour marking, in the outer surface (AF) of the outer housing part (1b), which groove is intended for cooperating with the detent projection (18) or the detent projections (18) in the second annular region (14b) of the securing part (14) in the inactive, non-securing state of the securing part (14).

30. A plug-in coupling according to one of Claims 1 to 29,
**characterised in that** a loosening torque of the outer housing part (1b) which is screwed to the inner housing part (1a) is greater than a torque which, if it acts on the securing part (14), causes breaking of the securing part (14).

## Revendications

1. Raccord enfichable pour des systèmes fluidiques, en particulier pour des systèmes véhiculant du CO₂ et du carburant, se composant d'un boîtier (1) et d'un connecteur (2) pouvant être enfiché dans le boîtier (1), dans lequel le connecteur (2) peut être enfiché avec un fût de connecteur (3) dans une ouverture de réception (4) du boîtier (1) en étant rendu étanche par au moins un joint circulaire (5, 5a, 5b) et peut y être verrouillé dans l'état enfiché contre une désolidarisation à l'aide d'un dispositif de verrouillage se composant d'au moins un élément d'arrêt cranté (7) disposé sur le connecteur (2) et d'un épaulement d'arrêt cranté (8) agissant de concert avec l'élément d'arrêt cranté (7) et dans lequel le boîtier (1) est réalisé en deux parties par le fait qu'il se compose d'une partie de boîtier intérieure (1a) et d'une partie de boîtier extérieure (1b) pouvant être reliée de manière amovible avec la partie de boîtier intérieure (1a) et entourant sensiblement la partie de boîtier intérieure (1a), **caractérisé par** un élément de sécurité (14) de forme annulaire avec un profil de base qui est sensiblement celui d'un cylindre creux, lequel peut être enfilé sur le boîtier (1), en particulier sur la partie de boîtier extérieure (1b) du boîtier (1), et lequel évite dans un état de verrouillage une rotation par rapport au boîtier (1) du connecteur (2) pouvant être enfilé dans le boîtier (1).

2. Raccord enfichable selon la revendication 1, **caractérisé en ce que** la partie de boîtier extérieure (1b) est configurée comme écrou d'accouplement pouvant faire l'objet d'une liaison vissée avec la partie de boîtier intérieure (1a).

3. Raccord enfichable selon la revendication 1 ou 2, **caractérisé en ce que** la partie de boîtier extérieure (1b) recouvre dans la zone d'entrée (4a) de l'ouverture de réception (4) l'extrémité de la partie de boîtier intérieure (1a).

4. Raccord enfichable selon l'une quelconque des revendications 1 à 3, **caractérisé par** au moins deux joints circulaires (5a, 5b).

5. Raccord enfichable selon l'une quelconque des revendications 1 à 4, **caractérisé en ce que** le connecteur (2) comprend du côté frontal un ergot d'introduction (9) dont le diamètre est réduit, en particulier par rapport au reste du corps du connecteur (2).

6. Raccord enfichable selon la revendication 5, **caractérisé en ce qu'**au moins un joint circulaire (5) entoure l'ergot d'introduction (9) et est disposé au pied de l'ergot d'introduction (9).

7. Raccord enfichable selon la revendication 5, **caractérisé en ce qu'**au moins un joint circulaire (5a, 5b), de préférence deux joints circulaires (5a, 5b), entoure(nt) l'ergot d'introduction (9) et est(sont) respectivement disposé(s) dans une rainure (9a, 9b) se trouvant dans l'enveloppe (M) de l'ergot d'introduction (9).

8. Raccord enfichable selon l'une quelconque des revendications 1 à 7, **caractérisé en ce que**, respectivement dans l'état d'enfichage du connecteur (2), le joint circulaire (5, 5a, 5b) repose avec son bord extérieur sur le côté intérieur de la partie de boîtier intérieure (1a).

9. Raccord enfichable selon l'une quelconque des revendications 1 à 8, **caractérisé en ce que** le joint circulaire (5, 5a, 5b) est respectivement formé par un joint torique.

10. Raccord enfichable selon l'une quelconque des revendications 1 à 6, **caractérisé en ce que** le joint circulaire (5) se compose d'une garniture d'étanchéité qui est formée d'une bague à deux lèvres et d'un élément de ressort qui y est enrobé.

11. Raccord enfichable selon l'une quelconque des revendications 1 à 10, **caractérisé en ce que** le joint circulaire (5, 5a, 5b) est constitué au moins partiellement, et en particulier la bague à deux lèvres, d'un composé de fluor et de carbone polymère, tel que le PTFE.

12. Raccord enfichable selon l'une quelconque des revendications 1 à 11, **caractérisé en ce que** le connecteur (2) comprend, en tant que butée pour le boîtier (1), en particulier pour sa partie de boîtier extérieure (1b), une collerette (10) dont le diamètre est agrandi par rapport à celui du reste du corps du connecteur (2).

13. Raccord enfichable selon la revendication 12, **caractérisé en ce que** sur le connecteur (2) est disposé - dans une position axiale voisine de la collerette (10) - un joint de protection contre les impuretés (11a) formé en particulier d'un joint torique.

14. Raccord enfichable selon la revendication 13, **caractérisé en ce que**, dans l'état d'enfichage du connecteur (2), le joint de protection contre les impuretés (11a) repose, dans la zone d'entrée (4a) de l'ouverture de réception (4), avec son bord extérieur sur le côté intérieur de la partie de boîtier extérieure (1b).

15. Raccord enfichable selon l'une quelconque des revendications 1 à 14, **caractérisé en ce qu'**entre la partie de boîtier intérieure (1a) et la partie de boîtier extérieure (1b) est disposé un joint de protection contre les impuretés (11b).

16. Raccord enfichable selon l'une quelconque des revendications 1 à 15, **caractérisé en ce que** le connecteur (2) ainsi que la partie de boîtier intérieure (1a) et la partie de boîtier extérieure (1b) se composent de matériaux métalliques, en particulier d'alliages d'aluminium ou d'alliages d'aciers spéciaux fortement alliés.

17. Raccord enfichable selon l'une quelconque des revendications 1 à 15, **caractérisé en ce que** sur le connecteur (2) est disposé un autre élément d'arrêt cranté (6).

18. Raccord enfichable selon l'une quelconque des revendications 1 à 16, **caractérisé en ce que** sur le connecteur (2) est disposé un élément d'arrêt cranté supplémentaire (6), et ceci de telle façon que, par cet élément d'arrêt cranté supplémentaire (6), est définie en interaction avec l'épaulement d'arrêt cranté (8) une position d'arrêt cranté préliminaire partiellement enfichée et que, par l'autre élément d'arrêt cranté (7), est définie en interaction avec l'épaulement d'arrêt cranté (8) et lors de la poursuite de l'enfichage du connecteur (2) une position d'arrêt cranté complet totalement enfichée, alors que dans la position d'arrêt cranté préliminaire il existe une étanchéité incomplète telle que, dans le cas d'une mise sous pression du fluide, en particulier d'un gaz, il se produit une fuite définie, limitée et perceptible, en particulier sous la forme d'un bruit de fuite acoustiquement perceptible, et alors que dans la position d'arrêt cranté complet il existe une étanchéité complète par rapport à la pression, laquelle est assurée par le joint circulaire (5) s'appuyant sur la surface d'étanchéité.

19. Raccord enfichable selon l'une quelconque des revendications 1 à 18, **caractérisé en ce que** l'élément d'arrêt cranté (7) ou les éléments d'arrêt crantés (6, 7) est(sont) formé(s) respectivement par une bague fendue maintenue dans respectivement une rainure circulaire du connecteur (2).

20. Raccord enfichable selon la revendication 19, **caractérisé en ce que**, dans la zone d'entrée (4a) de l'ouverture de réception (4), la partie de boîtier extérieure (1b) - en partant d'un diamètre intérieur qui est plus grand que le diamètre extérieur de la bague fendue lorsqu'elle se trouve dans l'état d'extension - se réduit en forme de cône jusqu'à un diamètre intérieur qui correspond approximativement au diamètre extérieur de la bague fendue lorsqu'elle se trouve dans l'état de compression.

21. Raccord enfichable selon la revendication 19 ou 20, **caractérisé par** un manchon de démontage (12) pouvant être vissé dans la partie de boîtier extérieure (1b) à la place de la partie de boîtier intérieure (1a) et lequel - en partant d'un diamètre intérieur qui est plus grand que le diamètre extérieur de la bague fendue lorsqu'elle se trouve dans l'état d'extension - se réduit, en particulier dans la zone d'entrée (13a) d'une ouverture axiale (13), en forme de cône jusqu'à un diamètre intérieur qui correspond approximativement au diamètre extérieur de la bague fendue lorsqu'elle se trouve dans l'état de compression.

22. Raccord enfichable selon l'une quelconque des revendications 1 à 21, **caractérisé en ce que** l'épaulement d'arrêt cranté (8) est formé à une extrémité sur la partie de boîtier extérieure (1b) dans une zone d'entrée (4a) de l'ouverture de réception (4).

23. Raccord enfichable selon l'une quelconque des revendications 1 à 22, **caractérisé en ce que** l'élément de sécurité (14) comprend une première zone annulaire (14a) et une deuxième zone annulaire (14b), la première zone annulaire (14a) pouvant être immobilisée de manière résistante à la torsion sur le connecteur (2), en particulier sur sa collerette (10), et la deuxième zone annulaire (14b) pouvant être immobilisée de manière résistante à la torsion et sans possibilité de glissement dans le sens axial sur la partie de boîtier extérieure (1b), en particulier sur sa surface extérieure (AF).

24. Raccord enfichable selon l'une quelconque des revendications 1 à 23, **caractérisé en ce que**, pour sa fixation sur le connecteur (2), l'élément de sécurité (14) comprend dans la première zone annulaire (14a) une denture intérieure (15), la collerette (10) du connecteur (2) étant configurée comme polygone.

25. Raccord enfichable selon la revendication 24, **caractérisé en ce que** la denture intérieure (15) comprend 12 à 36 dents (15a), en particulier 24 dents (15a).

26. Raccord enfichable selon les revendications 23 à 25, **caractérisé en ce que**, dans la deuxième zone annulaire (14b), l'élément de sécurité (14) comprend pour la fixation de manière résistante à la torsion sur la partie de boîtier extérieure (1b) au moins une surface de renforcement (16), de préférence deux surfaces de renforcement (16), qui, dans l'état de blocage de l'élément de sécurité (14), est(sont) destinée(s) à assurer un appui en complémentarité de forme sur respectivement une surface de renforcement correspondante (17) se trouvant sur la surface extérieure (AF) de la partie de boîtier extérieure (1b).

27. Raccord enfichable selon l'une quelconque des revendications 23 à 26, **caractérisé en ce que**, dans la deuxième zone annulaire (14b), l'élément de sécurité (14) comprend pour la fixation sans possibilité de glissement dans le sens axial sur la partie de boîtier extérieure (1b) au moins un taquet d'arrêt (18) configuré en particulier de manière souple, de préférence deux taquets d'arrêt (18), qui, dans l'état de blocage de l'élément de sécurité (14), est(sont) destiné(s) respectivement à assurer une interaction en complémentarité de forme et en complémentarité de forces avec respectivement une rainure correspondante (19a) se trouvant dans la surface extérieure (AF) de la partie de boîtier extérieure (1b).

28. Raccord enfichable selon l'une quelconque des revendications 23 à 27, **caractérisé en ce que**, dans la deuxième zone annulaire (14b), l'élément de sécurité (14) comprend pour la fixation sans possibilité de glissement dans le sens axial sur la partie de boîtier extérieure (1b) au moins un taquet d'arrêt (18), de préférence deux taquets d'arrêt (18), qui, dans un état inactif et n'assurant pas de sécurité de l'élément de sécurité (14), est(sont) destiné(s) respectivement à assurer une interaction en complémentarité de forme et en complémentarité de forces avec respectivement une rainure correspondante (19b) se trouvant dans la surface extérieure (AF) de la partie de boîtier extérieure (1b).

29. Raccord enfichable selon la revendication 28, **caractérisé en ce que** la rainure (19b) se trouvant dans la surface extérieure (AF) de la partie de boîtier extérieure (1b), laquelle est destinée à assurer dans l'état inactif et n'assurant pas de sécurité de l'élément de sécurité (14) une interaction avec le taquet d'arrêt (18) ou avec les taquets d'arrêt (18) se trouvant dans la deuxième zone annulaire (14b) de l'élément de sécurité (14), comprend un marquage, tel qu'un marquage à la peinture.

30. Raccord enfichable selon l'une quelconque des revendications 1 à 29, **caractérisé en ce qu'**un couple de desserrage de la partie de boîtier extérieure (1b) vissée sur la partie de boîtier intérieure (1a) est plus important qu'un couple de torsion qui conduit à une rupture de l'élément de sécurité (14) lorsqu'il est appliqué à l'élément de sécurité (14).
